Europäisches Patentamt

European Patent Office

Office européen des brevets

(19)

(11) Publication number: **0 212 704**
**A1**

(12) ## EUROPEAN PATENT APPLICATION

(21) Application number: **86201225.9**

(22) Date of filing: **11.07.86**

(51) Int. Cl.⁴: **A23G 9/28 , A23G 9/26**

(30) Priority: **12.07.85 SE 8503453**

(43) Date of publication of application:
**04.03.87 Bulletin 87/10**

(84) Designated Contracting States:
**AT BE CH DE FR GB IT LI NL SE**

(71) Applicant: **O.G. HOYER A/S**
**Sören Nymarksvej 13**
**DK-8270 Höjbjerg(DK)**

(72) Inventor: **Carlsson, Halvard Ingemar**
**Egnahemsvägen 6**
**S-445 00 Surte(SE)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **A frozen confection product and a method and an apparatus for manufacturing the product.**

(57) Icecream bodies having different material areas of different colours and/or tastes are easily produceable in open moulds, but not by the conventional extrusion production method, which is preferable from a quality point of view. The invention provides for a product, which is made of laid-together, individually extruded disc members (12,16) of icecream, between which even other confection materials (18) may be provided. Also, a lolly stick (14) may be secured to the product when it is laid onto a first disc member (12) before the latter is laid together with a second disc member (16). It is hereby even possible to obtain a safe anchoring of the stick (14), when the same is provided with an inner enlarged portion.

Fig.1

# A frozen confection product and a method and an apparatus for manufacturing the product.

This invention relates to a frozen confection product comprising two or more layers of icecream and, optionally, one or more other layers of some other confection material. In the production of icecream bodies or lollies as frozen in moulds it is principally easy to arrange for the moulds to be filled with different materials layer by layer, whereby different colours and/or tastes of the various materials may be combined in the single confection products, such a build-up of the products being preferred by many customers.

It is well known that icecream products may be produced otherwise than by freezing in a mould, viz. by an extrusion of a partly prefrozen icecream mass, which is cut into single pieces in connection with the mass leaving the extruder nozzle, whereafter the self-stabilized cut-off icecream members may be further frozen without being contained in a mould. Lolly sticks may be introduced into the extruded mass through an axial slit in the extruder pipe. This method is advantageous in that the icecream mass may be handled at a relatively low temperature, whereby the quality of the icecream product is found to be still higher than obtainable by the said mould shaping of the products. On the other hand, it is difficult to provide for a well controlled coextrusion of two or more different materials, e.g. with different colours or tastes.

It is the purpose of the invention to provide a frozen confection product which comprises, in a well defined manner, two or more different materials based on an extrusion shaping of the icecream material.

According to the invention there is provided a confection product comprising at least two separate layers of icecream material, each of these layers being of a type produced by extrusion, i.e. appearing as cut-off disc members, which are laid together, preferably with an intermediate layer of some other confection material and/or an intermediate lolly stick. Thus, the icecream material layers are not resulting from a coextrusion, but rather from two separate and ordinary extrusions, whereby the product with its sandwichlike design may be of a well defined shape and yet be of a high quality as conditioned by the extrusion production of the icecream layers.

In practice, compared with conventional icecream body of a given thickness as produced by the cutting off of an extruded icecream mass, the cut off disc members for use in the product of the invention will be of a considerably reduced thickness, but it has been found that the correspondingly relatively thin slices of extruded icecream mass are produceable with conventional extruder means without any particular or relevant problems.

The invention also comprises a method of manufacturing the discussed confection products, whereby a first icecream disc member is cut off from a first extruder and is deposited on a conveyor bringing the disc member to a position underneath a second extruder, from which another icecream disc member is cut off so as to be deposited on the top of the first icecream disc member, which, prior to this step, may be moved through a station in which it is provided with a top layer of some other confection material and/or in which a base portion of a laterally projecting lolly stick is laid onto the icecream disc member. In this manner it is easy to produce, fully automatically, the confection products as consisting of at least two layers of extruded icecream mass, with different colours or tastes, and with at least one intermediate layer of some desired filling material and/or with a lolly stick anchored between the two ice cream disc members.

The invention also comprises an apparatus for producing the confection products according to the disclosed method.

In the following the invention is described in more detail with reference to the drawing, in which:-

Fig. 1 is an exploded view of a confection product according to the invention, while

Fig. 2 is a schematic perspective view of an apparatus for manufacturing such confection products.

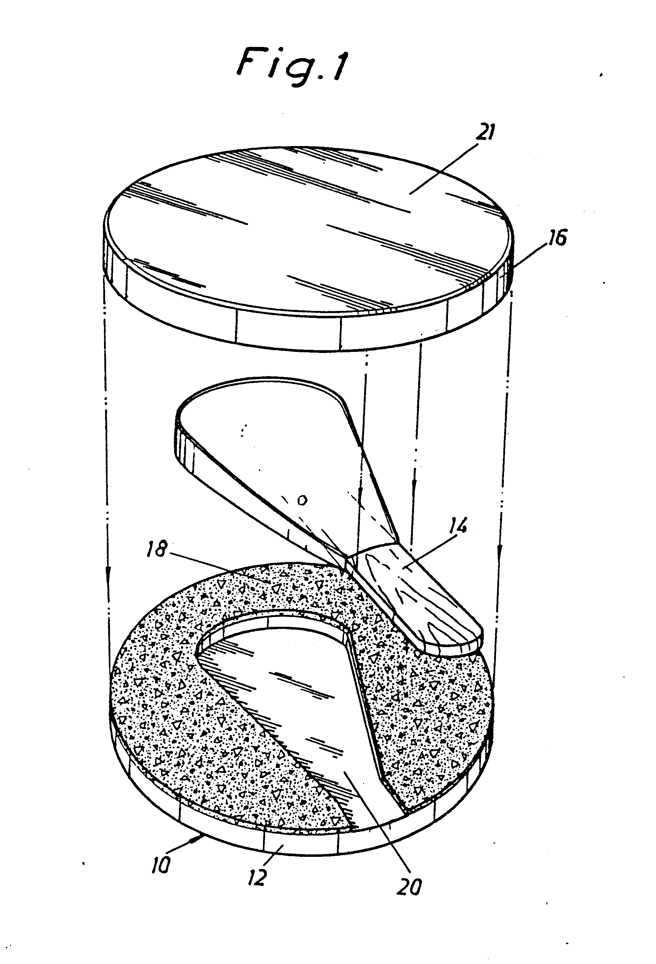

The confection product shown in Fig. 1 is generally designated 10 and comprises a lower extruded icecream disc 12, a club shaped lolly stick 14, and an upper extruded icecream disc 16. Between the two disc members 12 and 16 may be arranged one or more layers 18 of some other confection material such as jam, sherbet, chocolate granules, nougat, croquant, chopped nuts, toffee, or combinations of such or other materials.

The colours and/or the tastes of the two disc members 12 and 16 may be selected independently of each other.

The stick 14 may be club shaped as shown or it may be a conventional stick of wood, plastic, frozen chewing gum or any other suitable material, even including confection materials.

A recess 20 may be provided in one or both of the disc members 12,16 for taking up a filling of confection material 18 or -as shown in Fig. 1 -for taking up the base portion of the lolly stick 14. A corresponding recess for taking up the lolly stick may be provided in the intermediate confection material layer 18.

The finally assembled confection product may, conventionally, be dipped in a bath of a confection materials so as to be provided with a coating 21 of such a material.

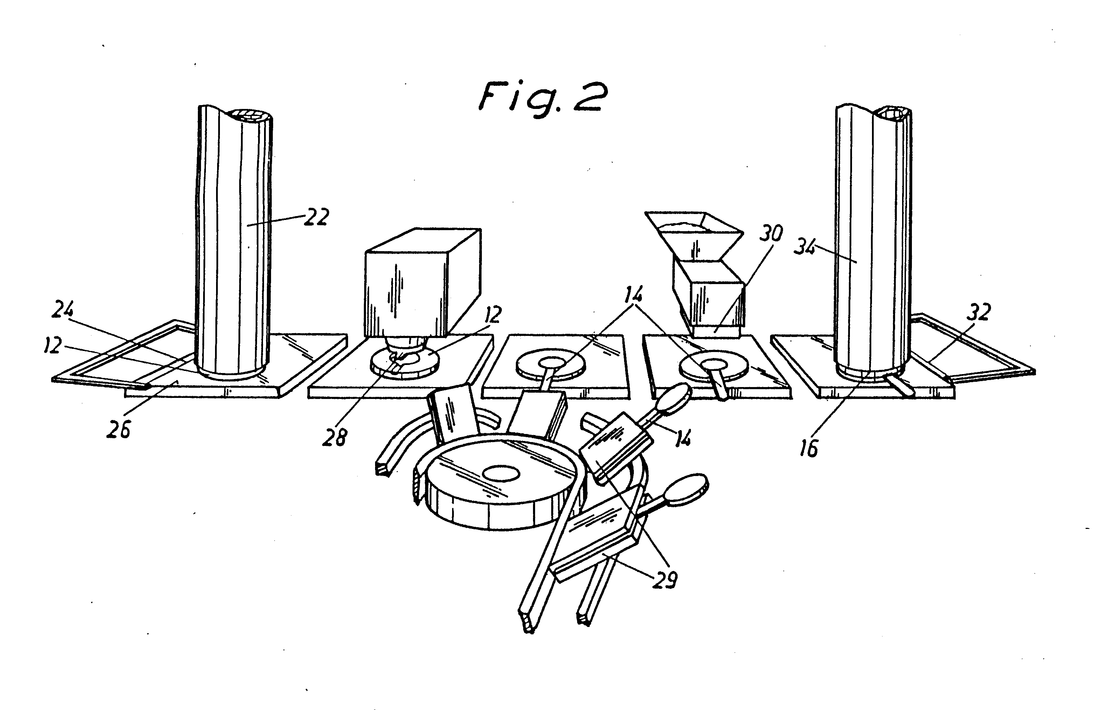

Fig. 2 shows an apparatus for producing the described products. The apparatus comprises a first vertical extruder pipe 22, through which an icecream mass for forming the lower disc member 12 is extruded. This mass, optionally, may have an inner core of some suitable confection material. The extruded mass is cut by means of a wire of knife 24, and the cut off thin disc member 12 is placed on a carrier plate 26 of a conveyor, which brings the carrier plate 26 into a following handling station, in which a die piston 28 is arranged for providing the recess 20 (Fig. 1) in the lower icecream disc 12. Thereafter the stick 14 is feeded to the disc 12 and laid into the recess 20 by means of automatically operating stick holders 29.

Thereafter the carrier plate 26 is moved further into a station, in which a dispenser device 30 operates to deposit a desired confection material 18 on the disc 12. The device 30, of course, should be adapted for the handling of the particular confection material, e.g. for the dosing of jam or for the spreading of granular chocolate.

The carrier plate 26 is then moved further to a position underneath a second icecream extruder 34, from which the upper icecream disc 16 is cut off by means of a wire or knife 32, whereby this disc is deposited on the top of the disc member 12 and its surface layer 18. The confection body 10 produced hereby may be automatically removed from the conveyor plate 26 and be transferred to a station in which it is dipped in a bath of e.g. chocolate for forming of the coating 31.

It will be appreciated that the confection bodies 10 may be produced with different shapes all according to the cross sectional shape of the respective extruder pipes 22,34 of which there may even be more than two. The single discs 12,16 should not necessarily be of planar shape, since the cutting wires 24,32 may well be moved along curved paths, preferably along correspondingly shaped lower edge portions of the extruder pipes or nozzles.

The confection bodies 10 may be produced without sticks and with several individual layers of icecream or similar prefrozen material. Intermediate confection layers 18 may be provided between all or only some of the icecream layers. These may have different colours and/or tastes, and generally it will be possible to produce such plural layer products based on extrusion, which is not possible with conventionally extruded icecream bodies, and the qualitative advantages of the extrusion production are maintained with the method according to the invention.

Compared with a conventional extrusion production the single icecream discs 12,16 will normally be of reduced thickness, whereby they are less suited to hold a lolly stick 14 as merely inserted in the disc material, but it will be appreciated that the sticks 14 are easily mountable anyway, viz. by being placed between two layers of icecream. In Fig. 2 the sticks 14 could well be mounted downstream of the station 30, i.e. between this station and the extruder 34.

The disc members 12 and 16 as delivered from the various extruders should not necessarily be of the same size, nor should they necessarily be laid together with their outer edges entirely flush.

Experiments have shown that the two disc members 12 and 16 are satisfactorily coherent in the final product, even when an intermediate layer 18 present. The preferred extrusion temperature of the icecream mass is some minus 4-5°C, as conventionally, and the mass is soft enough to produce a binding effect, which is stabilized when the product is later frozen at a lower temperature. However, for increasing the coherence it will be possible to subject the peripheral area of the product to a moderate heating before the final freezing of the product.

## Claims

1. A frozen confection product comprising two or more layers of icecream or other frozen confection material and, optionally, one or more other layers of some other confection material and/or a lolly stick, characterized in that the product is made of separate layers or disc members of said frozen material, each of these layers being of a type produced by extrusion so as to appear as cut-off, extruded disc members, which are laid together, preferably with an intermediate layer of said other confection material and/or an intermediate lolly stick.

2. A confection product according to claim 1, in which the thickness of each disc member as measured in its extrusion direction is much smaller than the width dimensions thereof.

3. A confection product according to claim 1, in which at least one of the disc members is provided with an internal recess for accomodating an enlarged interior portion of a lolly stick, which projects from the product generally parallel with the plane of the disc members.

4. A method of producing a frozen confection product as claimed in claim 1, characterized in that a first disc member of a prefrozen icecream or similar material is produced by extrusion from a first extruder so as to show a relatively small thickness in the extrusion direction compared with the width dimensions thereof, said first disc member being deposited on a carrier member, which is moved to a position adjacent a second extruder, from which a second disc member is cut off and laid together with the first disc member, if desired upon an intermediate layer of some other confection material having been applied to the first disc member.

5. A method according to claim 4 comprising the step of placing a lolly stick on the first disc member prior to its being laid together with the second disc member.

6. A method according to claim 5, whereby a recess or a depression is worked out in the first disc member and a lolly stick having an enlarged inner portion for cooperation with said recess or depression is laid onto the first disc member.

7. An apparatus for carrying out the method claimed in claim 4, characterized in that it comprises a first and at least a second extruder and a conveyor operable to receive an extruded disc member from the first extruder and to carry the disc member, preferably though one or more stations for applying additional confection material and/or a lolly stick member to the open side of the disc member, to a position adjacent the second extruder, said second extruder being operable to deliver and deposit a second extruded disc member onto the first disc member.

8. An apparatus according to claim 7 and comprising a die shaping station, in which the first disc member is provided with a recess or depression prior to its passage of a lolly stick mounting station, in which means are provided for placing on the first disc member a lolly stick having an enlarged inner portion for cooperation with said recess or depression.

# Fig.1

# Fig.2

0 212 704

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 307 499 (R.C. BERGSTROM)<br><br>* Figures 1,10; column 5, lines 33-64; column 5, lines 66-73; column 6, lines 5,6 *<br><br>--- | 1,2,4,7 | A 23 G 9/28<br>A 23 G 9/26 |
| X | US-A-2 248 651 (L.W. VAN LOSBERG)<br>* Figure 11 *<br><br>--- | 1 | |
| Y | US-A-3 385 234 (R.F. ANDERSON)<br><br>* Figures 1a,1b; claims 1,5 *<br><br>--- | 1,2,4,7 | |
| Y | US-A-3 981 660 (P.W. FORCELLA)<br><br>* Figures 2,11; claim 1 *<br><br>--- | 1,2,4,7 | |
| Y | US-A-2 859 714 (T.M. CUMMINGS et al.)<br>* Figures 1,2,5; claims 1,6,7 *<br><br>--- | 1,3,5,8 | **TECHNICAL FIELDS SEARCHED (Int. Cl.4)**<br><br>A 23 G |
| Y | GB-A- 707 411 (W.E. EGERTON)<br>* Figures 1,2; claim 1 *<br><br>--- | 1,4 | |
| Y | GB-A- 733 656 (THE MIDLAND COUNTIES DAIRY)<br>* Figures 5,2,6; claim 1 *<br><br>---           -/- | 1,3,5,8 | |

The present search report has been drawn up for all claims

| Place of search | Date of completion of the search | Examiner |
|---|---|---|
| THE HAGUE | 16-10-1986 | GUYON. R.H. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 822 623 (E.M. WIGHT) | | |
| A | US-A-1 430 342 (W.C. WALSH) | | |
| A | US-A-3 182 611 (I. RUBENSTEIN) | | |
| A | FR-A-1 566 800 (ESKIMO PIE CORP.) | | |
| A | US-A-3 512 485 (H.L. KOMBEREC et al.) | | |
| A | US-A-3 547 051 (H.L. KOMBEREC et al.) | | |
| A | US-A-2 113 575 (S. DECKER) | | |
| A | US-A-1 514 985 (W.R. MYERS) | | |

TECHNICAL FIELDS SEARCHED (Int. Cl.4)

The present search report has been drawn up for all claims

| Place of search | Date of completion of the search | Examiner |
|---|---|---|
| THE HAGUE | 16-10-1986 | GUYON R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82